# EUROPÄISCHE PATENTANMELDUNG

(11) **EP 2 860 712 A1**
(43) Veröffentlichungstag der Anmeldung: **15.04.2015**
(21) Anmeldenummer: 13188063.5
(22) Anmeldetag: 10.10.2013
(51) Int. Cl.: G07F 17/12, G06Q 20/18

(54) **System und Verfahren für den Versand von Postsendungen**

(71) Anmelder: Integer.pl S.A., 30-624 Krakow (PL)
(72) Erfinder: Gruca, Krzysztof, 30-611 Kraków (PL)
(74) Vertreter: Kilchert, Jochen

(57) **Zusammenfassung**

Die Erfindung betrifft ein System zum Versenden und Abholen von Postsendungen. Das System kann umfassen:
- mindestens eine Recheneinheit (25, 35);
- mindestens eine Authentifizierungseinrichtung zur Authentifizierung von Benutzern;
- eine Bezahleinrichtung (26) zur Entgegennahme von Bargeld;
- mindestens eine Speichereinrichtung (28, 60) zum Speichern von
- Transaktionen, die sich auf das Abholen und/oder Versenden von Postsendungen beziehen,
- Transaktionskosten, die jeweils einer Transaktion zugeordnet sind;
- Guthabenkonten, die jeweils mindestens einem Benutzer zugeordnet sind;
wobei das System dazu ausgebildet ist, einen Abbruch eines Bezahlvorgangs zur Bezahlung einer Transaktion und/oder eine Überzahlung festzustellen und beim Feststellen des Abbruchs bzw. der Überzahlung einen von der Bezahleinrichtung (6) erfassten Geldbetrag zumindest teilweise auf das Guthabenkonto eines Benutzers gutzuschreiben.

Ein Vorteil dieses Systems besteht darin, dass das Zahlen der Transaktionskosten in Teilen einfach ermöglicht wird.

## Beschreibung

Die vorliegende Erfindung betrifft ein System und ein Verfahren für den Versand von Postsendungen.

Paketautomaten für das Senden und Empfangen von Postsendungen beispielsweise Briefe oder Pakete, sind hinreichend bekannt. Üblicherweise umfassen entsprechende Paketautomaten eine Vielzahl von Paketfächern zum Einlegen von Postsendungen und ein Terminal mit Eingabe- und Ausgabeeinrichtungen. Beispielsweise können ein Bildschirm und eine Tastatur vorgesehen werden, um Adressdaten einzugeben. Des Weiteren kann der Terminal einen Scanner aufweisen, der es ermöglicht, an der Postsendung angebrachte Kennzeichnungen, beispielsweise Barcodes und/oder QR-Code-Labels zu erfassen.

Für den Transport von Postsendungen von einem Paketautomaten zu einem anderen und/oder zu einer bestimmten Adresse, werden die Paketautomaten regelmäßig von Paketabholern besucht. Die Aufgabe des Paketabholers ist es, Paketsendungen, die für den Versand aufgegeben wurden, abzuholen und solche, die an den Paketautomaten adressiert sind, in diesen einzulegen bzw. in diesem zu deponieren.

Jedem Versand einer Postsendung wird üblicherweise mindestens eine Transaktion zugeordnet, die wiederum bestimmte Kosten generiert. Beispielsweise kann der Versand einer bestimmten Postsendung von einer Ausgangsadresse zu einer Zieladresse als Transaktion oder Auftrag bezeichnet werden, wobei der entsprechenden Transaktion entsprechende Kosten, beispielsweise Transaktionskosten, zugeordnet sind.

Es sind verschiedene Möglichkeiten bekannt, wie der angefallene Geldbetrag für eine Transaktion beglichen werden kann. Beispielsweise können die Paketautomaten mit Kartenlesegeräten ausgestattet werden, um die entstandenen Kosten von einem Bankkonto bzw. einem Kreditkartenkonto abzubuchen. Des Weiteren können Bezahleinrichtungen zur Entgegennahme von Bargeld an den Paketautomaten vorgesehen werden, so dass die notwendigen Beträge in bar beglichen werden können. Es ist ein allgemeines Problem, dass entsprechende Bezahleinrichtungen mit viel Wechselgeld ausgestattet werden müssen, um stets über eine ausreichende Menge an Wechselgeld zu verfügen. Des Weiteren muss der Benutzer der Paketautomaten zumindest den ungefähren Geldbetrag bei sich tragen. Letztendlich erweist es sich als äußerst ärgerlich, wenn die für eine Transaktion notwendigen Daten, beispielsweise Empfängerdaten und Absenderdaten, bereits eingegeben wurden und der Versand daran scheitert, dass der Benutzer keine ausreichende Menge an Bargeld mit sich führt.

Eine Lösung für dieses Problem besteht darin, virtuelle Konten für registrierte Benutzer einzurichten, die mit einem bestimmten Guthaben befüllt werden können, so dass der Benutzer das Guthaben sukzessiv aufbrauchen kann. Jedoch stellt es sich auch hier als ein Problem dar, das virtuelle Konto zu befüllen. Häufig geschieht dies mittels Überweisungen, die jedoch aufwändig sind. Des Weiteren dauert es einige Zeit, bis eine entsprechende Überweisung auf dem virtuellen Konto eingeht. Überdies hinaus kann es bei den Überweisungen zu Fehlern kommen, die eine Zuordnung des überwiesenen Geldbetrags erschweren bzw. dies unmöglich machen.

Ausgehend von diesem Stand der Technik ist es Aufgabe der vorliegenden Erfindung, ein System für ein Versenden und/oder Abholen von Postsendungen bereitzustellen, das einfach und komfortabel benutzbar ist. Des Weiteren soll ein entsprechendes Verfahren angegeben werden. Insbesondere soll der Bezahlvorgang innerhalb eines entsprechenden Systems bzw. für einen entsprechenden Versand- und/oder Abholvorgang vereinfacht werden.

Diese Aufgabe wird durch ein System gemäß dem Anspruch 1 sowie durch ein Verfahren gemäß dem Anspruch 8 gelöst.

Insbesondere wird die Aufgabe durch ein System für ein Versenden und/oder Abholen von Postsendungen gelöst, das umfasst:
- mindestens eine Recheneinheit;
- mindestens eine Authentifizierungseinrichtung zur Authentifizierung von Benutzern;
- eine Bezahleinrichtung zur Entgegennahme von Bargeld;
- mindestens eine Speichereinrichtung zum Speichern von
- Transaktionen, die sich auf das Abholen und/oder Versenden von Postsendungen beziehen,
- Transaktionskosten, die jeweils einer Transaktion zugeordnet sind;
- Guthabenkonten, die jeweils mindestens einem Benutzer zugeordnet sind;
wobei das System dazu ausgebildet ist, einen Abbruch eines Bezahlvorgangs zur Bezahlung einer Transaktion und/oder eine Überzahlung festzustellen und beim Feststellen des Abbruchs bzw. der Überzahlung einen von der Bezahleinrichtung erfassten Geldbetrag zumindest teilweise auf das Guthabenkonto eines Benutzers gutzuschreiben.

Ein wesentlicher Aspekt der vorliegenden Erfindung besteht darin, dass beim Abbruch des Bezahlvorgangs und/oder bei einer Überzahlung das eingezahlte Bargeld nicht wieder ausgegeben sondern einem Guthabenkonto gutgeschrieben wird. Insofern kann der Benutzer die Kosten für eine bestimmte Transaktion in Raten bezahlen. Es ist nicht notwendig, beim entsprechenden System Wechselgeld vorrätig zu halten, da es üblicherweise nicht zur Ausschüttung von Restbeträgen kommt. Für den Benutzer ergibt sich des Weiteren der Vorteil, dass er die notwendigen Handlungen für die Erstellung einer Transaktion, beispielsweise Einlegen eines Pakets (Eingabe einer Empfängeradresse und/oder Eingabe einer Absenderadresse) an einem ersten Paketautomaten durchführen kann und die Bezahlung zumindest teilweise an einem zweiten. Der Benutzer muss also die Postsendung, nur weil er momentan kein Bargeld hat, nicht wieder mitnehmen.

In einer Ausführungsform umfasst das System eine Vielzahl von Paketautomaten, die kommunikativ miteinander verbunden sind. In einer anderen Ausführungsform ist die Vielzahl von Paketautomaten zusätzlich oder ausschließlich mit einem Server kommunikativ verbunden. Zumindest einige der Paketautomaten können jeweils mindestens eine Recheneinheit, mindestens eine Authentifizierungseinrichtung und mindestens eine Bezahleinrichtung umfassen. Die Paketautomaten können dazu ausgebildet sein, nach dem Abbruch eines Bezahlvorgangs zur Bezahlung einer Transaktion und/oder bei der Überzahlung einen von der Bezahleinrichtung erfassten Geldbetrag zumindest teilweise auf das Guthabenkonto eines Benutzers gutzuschreiben. Insofern kann zumindest ein Teilaspekt des erfindungsgemäßen Gedankens dezentral innerhalb der Paketautomaten implementiert sein.

Der Server kann mindestens eine Speichereinrichtung zum Speichern
- der Transaktionen und Transaktionskosten; und/oder
- der Guthabenkonten; und/oder
- Registrierungsdaten von Benutzern; und/oder
- Authentifizierungsdaten von Benutzern
umfassen. Eine Speicherung der notwendigen Daten kann also zentral innerhalb des Servers erfolgen. Hierdurch ist es möglich, dass ein Benutzer in effizienter Weise mehrere Paketautomaten nutzt, um eine bestimmte Transaktion abzuwickeln.

Das System kann dazu ausgebildet sein, nach der Authentifizierung eines Benutzers in der Speichereinrichtung unbezahlte und/oder unabgeschlossene Transaktionen des Benutzers zu suchen, und die gefundenen Transaktionen zur Bezahlung unter Verwendung der Bezahleinrichtung anzuzeigen. Die Anzeige kann auf einer Ausgabeeinrichtung des jeweiligen Paketautomaten erfolgen. Beispielsweise kann ein Benutzer mit einem Paketautomaten eine bestimmte unbezahlte und/oder unabgeschlossene Transaktion auswählen, und danach Bargeld über die Bezahleinrichtung einbringen, so dass der Bezahlvorgang abgeschlossen wird. Alternativ kann der Paketautomat dazu ausgebildet sein, die Authentifizierung und/oder das Anzeigen der unbezahlten und/oder unabgeschlossenen Transaktionen zu implementieren.

Das System kann eine Vielzahl von Paketfächern umfassen. Vorzugsweise kann das System dazu ausgebildet sein, ein Paketfach aus der Vielzahl von Paketfächern zu öffnen und/oder zu entriegeln, wenn die zugehörige Transaktion als abgeschlossen und/oder bezahlt gekennzeichnet ist. Es ist denkbar, dass ein bestimmtes Paket zur Entnahme der Postsendung erst dann freigegeben wird, wenn der Benutzer die Transaktionskosten und/oder weitere Kosten bezahlt hat. Insofern ist es beispielsweise für einen Online-Shop möglich, die Postsendung unmittelbar zu versenden, wobei das faktische Aushändigen der Postsendung an den Benutzer erst dann erfolgt, wenn die Transaktion tatsächlich bezahlt wurde. In diesem Zusammenhang sind das Durchführen von Teilzahlungen und das Abbrechen von Transaktionen besonders vorteilhaft, da häufig größere Geldbeträge entrichtet werden müssen. Es ist möglich, die beschriebene Logik durch den Paketautomaten und/oder die Paketautomaten zu implementieren.

Das System und/oder die Paketautomaten können dazu ausgebildet sein, nach einer Authentifizierung eines Benutzers die (offenen) Transaktionskosten abzüglich eines Guthabens auf dem Guthabenkonto anzuzeigen. Insofern können bereits geleistete Zahlungen mit den Transaktionskosten verrechnet werden.

Das System kann mindestens eine Kommunikationseinrichtung umfassen, wobei die Kommunikationseinrichtung dazu ausgebildet ist, Nachrichten mit Informationen über die Einlagerung einer Postsendung in einen Paketautomaten zu versenden. Insofern kann das System einen Benutzer darüber informieren, dass ein Paketabholer ein bestimmtes Paket bzw. eine bestimmte Postsendung in einem bestimmten Paketautomaten eingelagert hat.

Die oben genannte Aufgabe wird des Weiteren durch ein Verfahren gelöst, das die folgenden Schritte umfasst:
a) Authentifizieren eines Benutzers an einem Paketautomaten (20, 20');
b) Entriegeln und/oder Öffnen eines Paketfachs (30) zur Aufnahme einer Postsendung;
c) Speichern einer Transaktion, die sich auf die aufgenommene Postsendung bezieht, in Verbindung mit Transaktionskosten;
d) Entgegennahme einer Bargeldeinzahlung;
e) Ermitteln eines Geldbetrags der Bargeldeinzahlung;
f) Empfangen einer Eingabe zum Abbruch eines Bezahlvorgangs;
g) Speichern des Geldbetrags auf einem dem Benutzer zugeordneten Guthabenkonto.

Das Verfahren hat ähnliche Vorteile, wie diese bereits in Verbindung mit der Vorrichtung erläutert wurden. In einem Ausführungsbeispiel wird das Verfahren auf dem bereits beschriebenen System bzw. auf einigen Teilkomponenten dieses implementiert.

Das Verfahren kann des Weiteren die folgenden Schritte umfassen:
- ein erneutes Authentifizieren des Benutzers an dem Paketautomaten;
- ein erneutes Entgegennehmen einer weiteren Bargeldeinzahlung;
- ein erneutes Ermitteln eines weiteren Geldbetrags der weiteren Bargeldeinzahlung;
- ein Vergleichen der Transaktionskosten mit einer Summe der weiteren Bargeldeinzahlungen und eines Guthabens auf dem Guthabenkonto;
- ein Speichern eines Transaktionsstatus, der angibt, dass die Transaktion abgeschlossen und/oder bezahlt ist,
wenn die Summe größer ist als die Transaktionskosten.

Insofern kann das Verfahren ein Nachzahlen und/oder Überzahlen berücksichtigen und demgemäß den Transaktionsstatus einzelner Transaktionen setzen.

Das Verfahren kann ein Freigeben einer Postsendung für einen Transport umfassen, wenn der zugehörige Transaktionsstatus angibt, dass die Transaktion abgeschlossen und/oder bezahlt ist. Das heißt, das Verfahren ermöglicht es, Postsendungen einzulagern, ohne dass diese versandt werden. Ein tatsächlicher Versand und/oder Bearbeitung erfolgt erst dann, wenn die Transaktionskosten beglichen wurden.

Das Verfahren kann ein Entriegeln und/oder Öffnen eines Paketfachs zur Abholung durch einen Empfänger umfassen, wobei das Entriegeln und/oder Öffnen nur dann erfolgt, wenn der zugehörige Transaktionsstatus angibt, dass die Transaktion abgeschlossen und/oder bezahlt ist. Somit kann eine Postsendung solange zurückgehalten werden, bis diese endgültig bezahlt wurde. Das Verfahren kann des Weiteren einen Schritt des Zurücksendens umfassen, wenn innerhalb eines vorgegebenen Zeitintervalls keine Bezahlung erfolgt.

Die genannte Aufgabe wird des Weiteren durch ein computerlesbares Medium mit Instruktionen zur Implementierung des Verfahrens, wie es bereits beschrieben wurde, gelöst.

Nachfolgend wird die Erfindung mittels mehrerer Ausführungsbeispiele beschrieben, die anhand von Abbildungen näher erläutert werden. Hierbei zeigen:
- Fig. 1: ein Versandsystem, umfassend einen Server und mehrere Paketautomaten;
- Fig. 2: Komponenten eines Paketautomaten, wie dieser in dem Versandsystem gemäß Fig. 1 enthalten ist;
- Fig. 3: Komponenten eines Servers, wie dieser in dem Versandsystem gemäß Fig. 1 enthalten ist; und
- Fig. 4: ein Ablaufdiagramm, das eine erfindungsgemäße Bezahlung einer Transaktion verdeutlicht.

In der nachfolgenden Beschreibung werden für gleiche und gleich wirkende Teile dieselben Bezugsziffern verwendet.

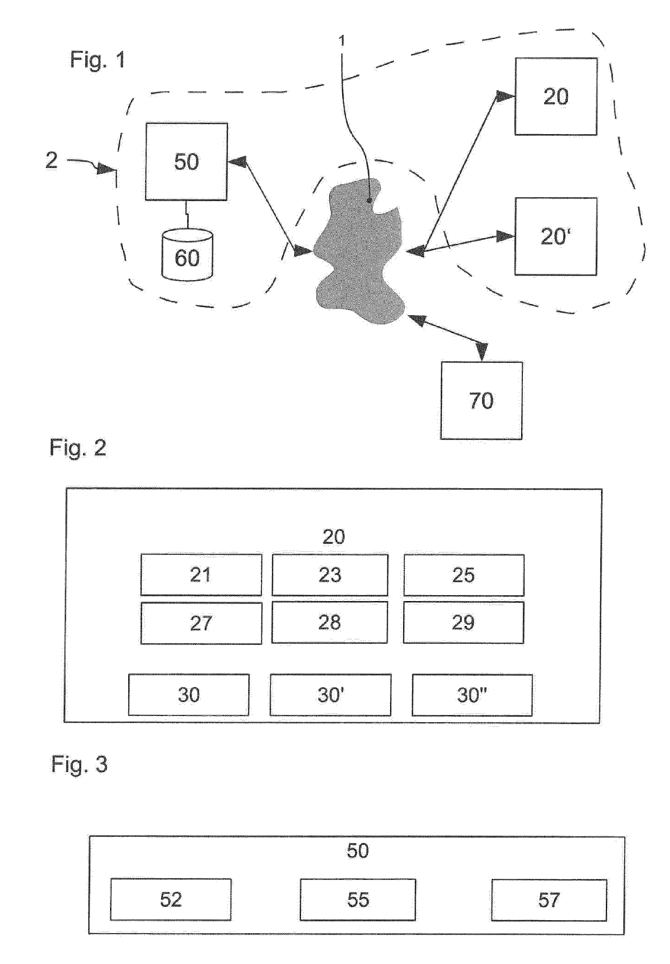

Fig. 1 zeigt ein erfindungsgemäßes System, bei dem ein Server 50 mit einer Vielzahl von Paketautomaten 20, 20', kommunikativ verbunden ist. In dem gezeigten Ausführungsbeispiel erfolgt die kommunikative Verbindung über ein öffentliches Netzwerk 1. Es ist denkbar, für die Kommunikation ein dediziertes Netzwerk, beispielsweise eine Verbindung per GSM oder UMTS, oder eine Mischung aus dedizierten und öffentlichen Netzwerken zu verwenden. Gemäß der Fig. 1 verfügt der Server 50 über eine Transaktionsdatenbank 60. Des Weiteren steht rein exemplarisch ein internetfähiges Mobiltelefon 70 mit dem Netzwerk 1 in Verbindung.

Die Paketautomaten 20, 20' und der Server 50 können als Versandsystem 2 bezeichnet werden, das dazu geeignet ist, den Transport von Paketen zwischen den Paketautomaten 20, 20' zu gewährleisten. Das Versandsystem 2 umfasst zumindest die elektronische Infrastruktur, um einen entsprechenden Versand zu ermöglichen.

Die Fig. 2 verdeutlicht exemplarisch einige Komponenten der Paketautomaten 20, 20'. Der Paketautomat 20 gemäß der Fig. 2 umfasst eine Eingabeeinrichtung 22, beispielsweise eine Tastatur, eine Ausgabeeinrichtung 23, beispielsweise einen Monitor, eine Verarbeitungseinrichtung 25, eine Bezahleinrichtung 26, eine Kommunikationseinrichtung 27 zur Kommunikation mit dem Server 50, eine Speichereinrichtung 28 und einen Barcode-Drucker 29. Aufgrund der Verarbeitungseinrichtung 25 und der Speichereinrichtung 28 ist es dem Paketautomaten 20 möglich, Programme zu speichern und auszuführen, die zumindest Teile des erfindungsgemäßen Verfahrens umsetzen. Theoretisch wäre es auch denkbar, dass ein Paketautomat 20, 20' sämtliche relevanten Verfahrensschritte durchführt oder diese dezentral über die einzelnen Paketautomaten 20, 20' verteilt sind.

Die Bezahleinrichtung 26 kann dazu ausgebildet sein, Münzen anzunehmen. Des Weiteren kann die Bezahleinrichtung 26 Geldscheine entgegennehmen und deren Echtheit überprüfen. Die Bezahleinrichtung 26 ermittelt einen Geldbetrag, der mittels der Bezahleinrichtung 26 in den Paketautomaten 20 eingegeben wurde.

Die Fig. 3 zeigt einzelne Komponenten des Servers 50, der in kommunikativer Verbindung mit den Paketautomaten 20, 20' steht. Dieser umfasst ein SMS-Gateway 52, eine zentrale Verarbeitungseinrichtung 55 sowie eine zentrale Kommunikationseinrichtung 57. Die zentrale Kommunikationseinrichtung 57 kann dazu eingesetzt werden, mit dem Paketautomaten 20 oder dem Mobiltelefon 70 zu kommunizieren.

Des Weiteren ist dem Server 50 eine Transaktionsdatenbank 60 zugeordnet, die eine Vielzahl von Transaktionen mit zugehörigen Transaktionskosten speichert. Des Weiteren kann die Datenbank 60 dazu ausgebildet sein, den Status der jeweiligen Transaktion zu speichern. Zusätzlich kann die Transaktionsdatenbank 60 Guthabenkonten und/oder Registrierungsdaten von registrierten Benutzern und/oder Authentifizierungsdaten zur Authentifizierung eines Benutzers enthalten.

Der Paketautomat 20 ist dazu ausgebildet, einen Benutzer zu authentifizieren. Nach der Authentifizierung kann ein registrierter Benutzer eine Transaktion erstellen, indem er eine Zieladresse und eine Startadresse an den Paketautomaten 20 eingibt. Danach kann der Paketautomat 20 den Benutzer auffordern, die Größe des Pakets und ggf. dessen Gewicht anzugeben. Der Paketautomat 20 oder der Server 50 errechnet aus den eingegebenen Daten die Transaktionskosten, die dem Benutzer mittels der Ausgabeeinrichtung 23 angezeigt werden können. Gleichzeitig erzeugt der Paketautomat 20 oder Server 50 eine Transaktion, die in einem Ausführungsbeispiel zentral in der Transaktionsdatenbank 60 des Servers 50 als offene Transaktion gespeichert wird.

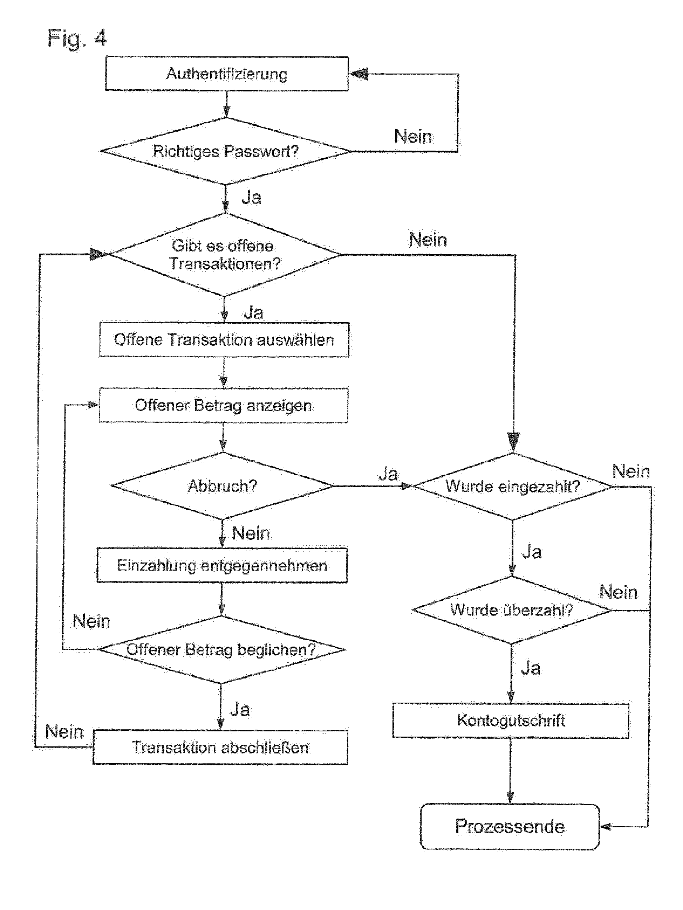

Die Fig. 4 zeigt exemplarisch einige wesentliche Aspekte für den Abschluss von offenen Transaktionen. Hierfür authentifiziert sich der Benutzer an dem Paketautomaten 20. Der Paketautomat 20 ist dazu ausgebildet, festzustellen ob der Benutzer das richtige Passwort eingegeben hat. Soweit dies der Fall ist, prüft der Paketautomat 20, ob es für den jeweiligen Benutzer offene Transaktionen gibt. Hierfür kann eine Abfrage an den Server 50 abgegeben werden. Theoretisch ist es denkbar, dass der Benutzer in dem Authentifizierungsprozess ein falsches Passwort eingibt. In diesem Fall wird er zur erneuten Eingabe des Passworts und/oder eines Benutzernamens aufgefordert. Die für die Authentifizierung notwendigen Daten können, wie bereits erwähnt, dezentral oder zentral (im Server 50) gespeichert sein.

Soweit es offene Transaktionen für den jeweiligen Benutzer gibt, werden diese von dem Paketautomaten 20 angezeigt. Der Benutzer erhält die Möglichkeit, eine dieser offenen Transaktionen auszuwählen, woraufhin der zugehörige offene Betrag, d.h. der Teil der Transaktionskosten, die noch nicht bezahlt wurden, angezeigt wird. Hieraufhin erhält der Benutzer die Möglichkeit, den Bezahlvorgang abzubrechen oder fortzusetzen. Soweit er sich für eine Fortsetzung des Bezahlvorgangs entscheidet, kann er eine Einzahlung vornehmen. Vorzugsweise erfolgt die Einzahlung mittels der Bezahleinrichtung 26 des Paketautomaten 20. Eine Einzahlung kann solange fortgesetzt werden, bis der offene Betrag beglichen ist. Die Transaktion wird abgeschlossen, wenn der Benutzer genügend Bargeld in den Paketautomaten 20 eingibt, so dass der der jeweiligen Transaktion zugeordnete offene Betrag beglichen ist.

Das Abschließen einer Transaktion kann eine Vielzahl von Handlungen, beispielsweise die Beauftragung eines Paketabholers mit der Abholung, auslösen. Zusätzlich kann ein Empfänger mit dem Abschluss der Transaktion darüber informiert werden, dass er in naher Zukunft ein Paket erhalten soll.

Nach dem Abschluss der Transaktion kann das System überprüfen, ob es weitere offene Transaktionen gibt. Soweit dies der Fall ist, kann eine weitere Transaktion ausgewählt und eine weitere Einzahlung vorgenommen werden.

Sollten keine offenen Transaktionen mehr vorliegen, stellt das Versandsystem fest, ob eine Einzahlung erfolgt ist. Sollte dies der Fall sein, so wird überprüft, ob eine Überzahlung vorgenommen wurde. Das heißt, es wird kontrolliert, ob der Benutzer mehr Geld bezahlt hat, als dies für den Abschluss der Transaktion notwendig gewesen wäre. Soweit dies der Fall ist, wird eine Gutschrift auf das Konto des jeweiligen Benutzers erstellt. Insofern ergibt sich auf einem Guthabenkonto des Benutzers eine positive Bilanz. Nach dem Erstellen dieser Gutschrift kann der Prozess beendet werden.

Theoretisch ist es auch möglich, dass ein Benutzer nach dem Anzeigen der offenen Beträge sich für einen Abbruch entscheidet. In diesem Fall wird wiederum geprüft, ob eine Einzahlung erfolgt ist. Soweit dies der Fall ist, gilt jede Einzahlung als Überzahlung und wird, da keine Transaktion abgeschlossen werden kann, dem Guthabenkonto gutgeschrieben.

Der oben beschriebene Ablauf soll lediglich eine exemplarische Verdeutlichung des erfindungswesentlichen Konzepts sein. Im Endeffekt ist es für den Benutzer möglich, sich so oft wie notwendig an dem Versandsystem 2 zu authentifizieren und Einzahlungen vorzunehmen. Die Einzahlungen können allesamt einer bestimmten Transaktion zugeordnet oder auf mehrere Transaktionen aufgeteilt werden. Das erfindungsgemäße Versandsystem 2 ermöglicht es sehr einfach, Teilzahlungen vorzunehmen, wobei sich der Benutzer hierfür lediglich authentifizieren muss. Das erneute Eingeben der Transaktionsdaten, beispielsweise Empfängeradresse, Gewicht der Postsendung und Ähnliches entfällt. Diese Daten werden zentral oder dezentral gespeichert und über eine Statusangabe derart gekennzeichnet, dass deren Bearbeitung vorerst (bis zur endgültigen Bezahlung) aufgeschoben wird.

An dieser Stelle sei darauf hingewiesen, dass alle oben beschriebenen Teile bzw. Komponenten für sich allein gesehen oder in Kombination als erfindungswesentlich beansprucht werden. Entsprechendes gilt für die einzelnen beschriebenen Verfahrensschritte.

### Bezugszeichenliste

- 1: Netzwerk
- 2: Versandsystem
- 20, 20': Paketautomat
- 21: Eingabeeinrichtung
- 23: Ausgabeeinrichtung
- 25: Bearbeitungseinrichtung
- 26: Bezahleinrichtung
- 27: Kommunikationseinrichtung
- 28: Speichereinrichtung
- 29: Barcode-Drucker
- 30, 30', 30": Paketfach
- 50: Server
- 52: SMS-Gateway
- 55: Zentrale Verarbeitungseinrichtung
- 57: Zentrale Kommunikationseinrichtung
- 60: Transaktionsdatenbank
- 70: Mobilfunktelefon

## Patentansprüche

1. System für ein Versenden und/oder Abholen von Postsendungen, umfassend:
- mindestens eine Recheneinheit (25, 35);
- mindestens eine Authentifizierungseinrichtung zur Authentifizierung von Benutzern;
- eine Bezahleinrichtung (26) zur Entgegennahme von Bargeld;
- mindestens eine Speichereinrichtung (28, 60) zum Speichern von
- Transaktionen, die sich auf das Abholen und/oder Versenden von Postsendungen beziehen,
- Transaktionskosten, die jeweils einer Transaktion zugeordnet sind;
- Guthabenkonten, die jeweils mindestens einem Benutzer zugeordnet sind;
**dadurch gekennzeichnet, dass**
das System dazu ausgebildet ist, einen Abbruch eines Bezahlvorgangs zur Bezahlung einer Transaktion und/oder eine Überzahlung festzustellen und beim Feststellen des Abbruchs bzw. der Überzahlung einen von der Bezahleinrichtung (6) erfassten Geldbetrag zumindest teilweise auf das Guthabenkonto eines Benutzers gutzuschreiben.

2. System nach Anspruch 1,
**gekennzeichnet durch**
eine Vielzahl von Paketautomaten (20, 20'), die kommunikativ miteinander und/oder mit mindestens einem Server (50) verbunden sind,
wobei zumindest einige der Paketautomaten (20, 20') jeweils
- mindestens eine Recheneinheit (25),
- mindestens eine Authentifizierungseinrichtung zur Authentifizierung von Benutzern und
- mindestens eine Bezahleinrichtung zur Entgegennahme von Bargeld umfassen und jeweils dazu ausgebildet sind, nach dem Abbruch eines Bezahlvorgangs zur Bezahlung einer Transaktion und/oder bei der Überzahlung einen von der Bezahleinrichtung erfassten Geldbetrag zumindest teilweise auf das Guthabenkonto eines Benutzers gutzuschreiben.

3. System nach einem der vorhergehenden Ansprüche,
**dadurch gekennzeichnet, dass**
der Server (50) mindestens eine Speichereinrichtung (28, 60) zum Speichern
- der Transaktionen und Transaktionskosten; und/oder
- der Guthabenkonten; und/oder
- Registrierungsdaten von Benutzern; und/oder
- Authentifizierungsdaten von Benutzern
umfasst.

4. System nach einem der vorhergehenden Ansprüche,
**dadurch gekennzeichnet, dass**
das System dazu ausgebildet ist bzw. die Paketautomaten (20, 20') dazu ausgebildet sind, nach einer Authentifizierung eines Benutzers, in der Speichereinrichtung (28, 60) unbezahlte und/oder unabgeschlossene Transaktion des Benutzers zu suchen, und die gefundenen Transaktionen zur Bezahlung unter Verwendung der Bezahlreinrichtung (26) anzuzeigen.

5. System nach einem der vorhergehenden Ansprüche,
**gekennzeichnet durch**
- eine Vielzahl von Paketfächern (30),
wobei das System dazu ausgebildet ist, ein Paketfach (30) aus der Vielzahl von Paketfächern zu öffnen und/oder entriegeln, wenn die zugehörige Transaktion als abgeschlossen und/oder bezahlt gekennzeichnet ist.

6. System nach einem der vorhergehenden Ansprüche,
**dadurch gekennzeichnet, dass**
das System dazu ausgebildet ist bzw. die Paketautomaten (20, 20') dazu ausgebildet sind, nach einer Authentifizierung eines Benutzers, dem Benutzer die Transaktionskosten abzüglich eines Guthabens auf dem Guthabenkonto anzuzeigen.

7. System nach einem der vorhergehenden Ansprüche,
**gekennzeichnet durch**
mindestens eine Kommunikationseinrichtung, insbesondere ein SMS-Gateway (52), für den Versand einer Nachricht mit Informationen über die Einlagerung einer Postsendung in einen Paketautomaten (20, 20').

8. Verfahren, insbesondere zur Ausführung auf einem System nach einem der vorhergehenden Ansprüche, umfassend die Schritte:
a) Authentifizieren eines Benutzers an einem Paketautomaten (20, 20');
b) Entriegeln und/oder Öffnen eines Paketfachs (30) zur Aufnahme einer Postsendung;
c) Speichern einer Transaktion, die sich auf die aufgenommene Postsendung bezieht, in Verbindung mit Transaktionskosten;
d) Entgegennahme einer Bargeldeinzahlung;
e) Ermitteln eines Geldbetrags der Bargeldeinzahlung;
f) Empfangen einer Eingabe zum Abbruch eines Bezahlvorgangs;
g) Speichern des Geldbetrags auf einem dem Benutzer zugeordneten Guthabenkonto.

9. Verfahren nach Anspruch 8,
**gekennzeichnet durch**
ein erneutes Authentifizieren des Benutzers an einem Paketautomaten (20, 20'),
ein erneutes Entgegennehmen einer weiteren Bargeldeinzahlung;
ein erneutes Ermitteln eines weiteren Geldbetrags der weiteren Bargeldeinzahlung;
ein Vergleichen der Transaktionskosten mit einer Summe der weiteren Bargeldeinzahlung und eines Guthabens auf dem Guthabenkonto;
ein Speichern eines Transaktionsstatus, der angibt, dass die Transaktion abgeschlossen und/oder bezahlt ist, wenn die Summe größer ist als die Transaktionskosten.

10. Verfahren nach Anspruch 8 oder 9, insbesondere nach Anspruch 9,
**gekennzeichnet durch**
eine Freigabe einer Postsendung für einen Transport nur dann, wenn der zugehörige Transaktionsstatus angibt, dass die Transaktion abgeschlossen und/oder bezahlt ist.

11. Verfahren nach einem der Ansprüche 8 bis 10,
**gekennzeichnet durch**
ein Speichern eines Geldbetrags der aus einer Überzahlung resultiert auf dem Guthabenkonto.

12. Verfahren nach einem der Ansprüche 8 bis 11,
**gekennzeichnet durch**
ein Entriegeln und/oder Öffnen eines Paketfachs (30) zur Abholung **durch** einen Empfänger, nur dann wenn der zugehörige Transaktionsstatus angibt, dass die Transaktion abgeschlossen und/oder bezahlt ist.

13. Computerlesbares Medium mit Instruktionen zur Implementierung des Verfahrens nach einem der Ansprüche 8 bis 12, wenn die Instruktionen ausgeführt werden.
